(19) Europäisches Patentamt
European Patent Office
Office européen des brevets

(11) **EP 3 905 511 B1**

(12) **EUROPEAN PATENT SPECIFICATION**

(45) Date of publication and mention
of the grant of the patent:
**06.11.2024 Bulletin 2024/45**

(21) Application number: **19906074.0**

(22) Date of filing: **13.11.2019**

(51) International Patent Classification (IPC):
$H02P\ 21/02^{(2006.01)}$ $\quad H02P\ 5/74^{(2006.01)}$
$H02P\ 29/60^{(2016.01)}$ $\quad B60L\ 9/22^{(2006.01)}$
$B60L\ 15/20^{(2006.01)}$ $\quad B60L\ 15/02^{(2006.01)}$

(52) Cooperative Patent Classification (CPC):
**H02P 29/60; B60L 9/22; B60L 15/025;**
**B60L 15/2045; H02P 5/74; H02P 21/02;**
B60L 2200/26; B60L 2220/14; B60L 2220/42;
B60L 2240/423; B60L 2240/425; B60L 2240/429;
Y02T 10/64; Y02T 10/72

(86) International application number:
**PCT/JP2019/044581**

(87) International publication number:
**WO 2020/137219 (02.07.2020 Gazette 2020/27)**

(54) **DRIVE DEVICE FOR DYNAMO-ELECTRIC MACHINE, AND METHOD FOR DRIVING**

ANTRIEBSVORRICHTUNG FÜR EINE DYNAMOELEKTRISCHE MASCHINE UND VERFAHREN
ZUM ANTRIEB

DISPOSITIF D'ENTRAÎNEMENT POUR MACHINE DYNAMOÉLECTRIQUE ET PROCÉDÉ
D'ENTRAÎNEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.12.2018 JP 2018247828**

(43) Date of publication of application:
**03.11.2021 Bulletin 2021/44**

(73) Proprietor: **Hitachi, Ltd.**
**Tokyo 100-8280 (JP)**

(72) Inventors:
• **KUNIHIRO, Naoki**
**Tokyo 100-8280 (JP)**
• **SHINOMIYA, Takeshi**
**Tokyo 100-8280 (JP)**
• **ITO, Makoto**
**Tokyo 100-8280 (JP)**

(74) Representative: **Mewburn Ellis LLP**
**Aurora Building**
**Counterslip**
**Bristol BS1 6BX (GB)**

(56) References cited:
WO-A1-2014/057575 JP-A- 2004 201 425
JP-A- 2010 130 726 JP-A- 2013 165 641
JP-A- 2013 198 340 JP-A- 2015 035 874
JP-A- 2017 011 872 JP-A- 2018 137 932
JP-A- H0 538 182 JP-A- H0 739 018
JP-A- H0 739 018 JP-A- H07 131 994
JP-A- H1 169 871 US-A1- 2011 144 843
US-A1- 2015 145 442

• XIAOFENG DING ET AL: "MODELING OF EDDY
CURRENT LOSS AND TEMPERATURE OF THE
MAGNETS IN PERMANENT MAGNET
MACHINES", JOURNAL OF CIRCUITS, SYSTEMS
AND COMPUTERS, vol. 20, no. 07, 1 November
2011 (2011-11-01), pages 1287 - 1301,
XP055170559, ISSN: 0218-1266, DOI:
10.1142/S021812661100789X

**Description**

Technical Field

The present invention relates to a drive device for a permanent magnet synchronous motor for a railroad vehicle.

Background Art

In recent years, railroad vehicles with high energy efficiency capable of large-scale transportation are attracting attention. More energy saving and improvement in efficiency are expected for railroad vehicles by introduction of a highly-efficient dynamo-electric machine, energy saving operation control, and control in accordance with the characteristics of the dynamo-electric machine.

As one of these types of techniques, a technique for improving the efficiency and reliability of a drive system for a railroad vehicle by individually controlling a plurality of dynamo-electric machines because the railroad vehicle obtains power by the plurality of dynamo-electric machines is being studied.

In order to improve the efficiency of a railroad vehicle, Patient Literature 1 proposes a control device for a railroad vehicle which has a configuration in which an AC circuit breaker is provided between a power conversion device and each of a plurality of dynamo-electric machines and a circuit breaker control unit for individually controlling the opening and closing of the AC circuit breaker based on an operation control command from a cab is provided and which is driven under operating conditions where the dynamo-electric machine is highly efficient by reducing the number of dynamo-electric machines to be driven in accordance with torque necessary for the vehicle.

In order to maintain the output torque of an electric vehicle even in an open operation, Patient Literature 2 proposes an electric vehicle control device in which when the temperature of a dynamo-electric machine exceeds or is determined to exceed a preset allowance value, in order to change into a torque command suppressing the temperature of the dynamo-electric machine within the allowance value, a dynamo-electric machine whose torque is supplemented is selected in the order in which the temperature has a margin among the other dynamo-electric machines, and the shortage of the output torque in the dynamo-electric machine where the temperature rises is compensated.

Citation List

Patient Literature

[Patent Literature 1] Japanese Unexamined Patent Application Publication No. 2018-57185
[Patent Literature 2] Japanese Patent No. 5060266
[Patent Literature 3] JPH07039018A (NISSAN MOTOR) (7 February 1995) discloses a number-of-revolutions detection means which detects the number of revolutions of a plurality of motors, a temperature detection means which detects respective temperatures, a voltage detection means which detects the voltage of a driving power supply and a required-driving-force detection means which detects a driving force required for a motor-driven vehicle are installed.

Summary of Invention

Technical Problem

As a result of intensive studies for the purpose of further improving the efficiency of a drive device for a railroad vehicle, the inventors of the application have obtained the following findings.

1) Patent Literature 1 discloses a technique for improving efficiency by driving a dynamo-electric machine at a point where the efficiency of the dynamo-electric machine is enhanced while switching the number of dynamo-electric machines using a circuit breaker. Then, although the dynamo-electric machine is selectively driven so that the temperature of the dynamo-electric machine to be driven is not biased against the temperature fluctuation of the dynamo-electric machine, only by operating the dynamo-electric machine with a low temperature to equalize the losses of a plurality of dynamo-electric machines, the losses themselves generated in the plurality of dynamo-electric machines are not reduced, and there is room for improvement to realize high efficiency.

In addition, if the technique described in Patent Literature 1 is applied to a permanent magnet synchronous motor, since a rotor is provided with a permanent magnet, an iron loss occurs during the free-run of the rotor when an AC circuit breaker is opened, and there is a problem that the temperature of the permanent magnet synchronous motor rises. In particular, in a high speed region, although the magnetic flux is weakened by weaker field control during the normal control period, the magnetic flux is not weakened during the free-run at the time of opening, and thus the iron loss increases. In the vicinity of the highest speed, heat generation possibly increases in the open period rather than in the normal control period, and there is a problem in terms of cooling performance and reliability.

2) In order to maintain the output torque of a vehicle even in an open operation, Patent Literature 2 discloses a technique in which when the temperature of a dynamo-electric machine exceeds or is determined to exceed a preset allowance value, a dynamo-electric machine is selected in the order in which the temperature has a margin, and torque is supplemented. Although the effect of high efficiency cannot be obtained at the time of normal operation because of being operated only when the temperature is exceeded, if the technique of Patent Literature 2 is applied and the torque of the dynamo-electric machine is allocated in the order in which the temperature has a margin, the resistance value becomes smaller and the effect of high efficiency can be obtained as the temperature decreases due to operating conditions where a copper loss is dominant among the losses of the dynamo-electric machine at the time of low-speed rotation and high torque.

However, there is a problem that the magnet magnetic flux increases and the efficiency is deteriorated as the temperature decreases due to operating conditions where an iron loss is dominant at the time of high-speed rotation and low torque In other words, it is not sufficient to realize high efficiency only by allocating the torque of the dynamo-electric machine in the order in which the temperature has a margin based on the temperature of the permanent magnet synchronous motor, and there is a possibility that the efficiency is deteriorated depending on operating conditions.

3) For the reasons described above, there is room for improvement to realize the high efficiency of a drive system using a plurality of dynamo-electric machines, in particular, permanent magnet synchronous motors.

An object of the present invention is to improve the efficiency of a system for obtaining, when driving and controlling a plurality of dynamo-electric machines, power by the plurality of dynamo-electric machines by individually changing a torque operation amount in consideration of the temperature dependency of the dynamo-electric machines.

Solution to Problem

The present invention provides a drive device for a dynamo-electric machine according to claim 1. Further aspects of the invention are described by the remaining claims. Advantageous Effects of Invention

According to the present invention, in a system driven by using a plurality of dynamo-electric machines, the high efficiency of the drive system can be realized and power consumption can be further reduced by individually changing the output torque of the plurality of dynamo-electric machines in consideration of the temperature dependency of the efficiency of the dynamo-electric machines.

Brief Description of Drawings

Fig. 1 is a diagram for showing an example of functional blocks of a drive device for a permanent magnet synchronous motor according to a first embodiment.

Fig. 2 is a diagram for showing an example in which a temperature detector is installed in the permanent magnet synchronous motor as a modified example of the drive device for the permanent magnet synchronous motor according to the first embodiment.

Figs. 3 are diagrams each showing changes in the ratio of a copper loss to an iron loss when the permanent magnet synchronous motors are driven at the same rotational speed and the torque and the temperature are changed.

Figs. 4 are diagrams each showing changes in the ratio of the copper loss to the iron loss when the permanent magnet synchronous motors are driven with the same torque and the rotational speed and the temperature are changed.

Fig. 5 is a diagram for showing an example of an operation region where the permanent magnet synchronous motor becomes highly efficient when the temperature of the permanent magnet synchronous motor is higher or lower than a reference value.

Figs. 6 are diagrams each showing an example of functional blocks of a torque calculation unit provided in an integrated control unit shown in Fig. 1.

Fig. 7 is a diagram for showing an outline configuration of a part of a railroad vehicle on which the drive device for the permanent magnet synchronous motor according to the present invention is mounted.

Fig. 8 is a diagram for showing an example of functional blocks of a drive device for a permanent magnet synchronous motor according to a second embodiment.

Fig. 9 is a diagram for showing a time flow in which the magnet magnetic flux is estimated during a zero-torque control period before the torque rising at the time of coasting restart.

Fig. 10 is a diagram for showing a time flow in which the magnet magnetic flux is estimated during the zero-torque control period immediately before the gate off after the torque falling.

Description of Embodiments

Hereinafter, as forms of carrying out the present invention, first and second embodiments will be described in detail in accordance with the drawings. In each embodiment, requirements having the same reference numerals are shown as the same requirements or requirements having similar functions.

Note that configurations described below are merely presented as embodiments, and implementation modes according to the present invention are not limited to the following embodiments.

[First Embodiment]

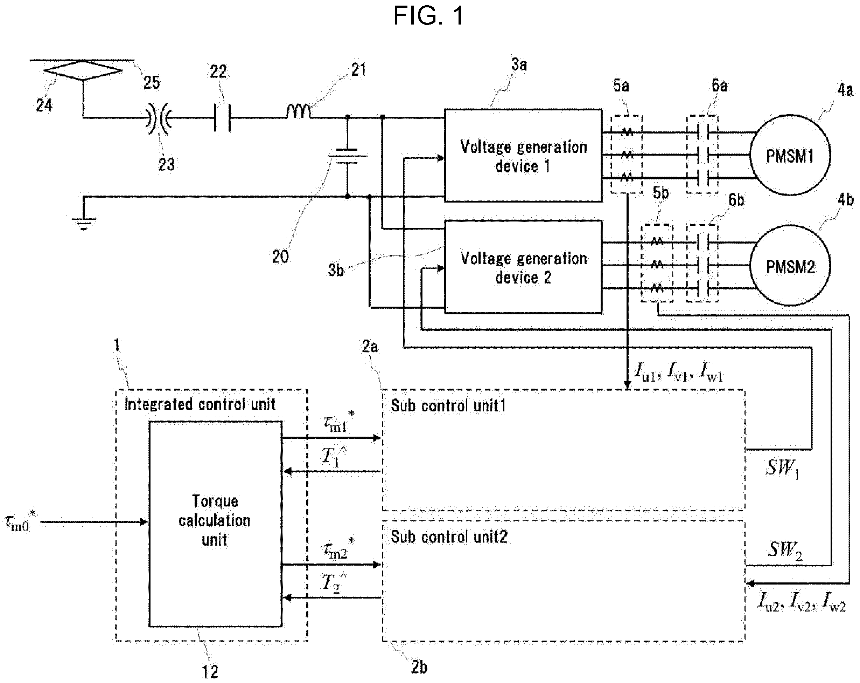

Fig. 1 is a diagram for showing an example of functional blocks of a drive device for a permanent magnet synchronous motor according to a first embodiment. A configuration for adjusting a torque command value is shown as functional blocks so that the total efficiency of a drive system configured using plural permanent magnet synchronous motors is enhanced based on temperature information of each permanent magnet synchronous motor.

Although two permanent magnet synchronous motors 4a and 4b are shown in Fig. 1, the number of permanent magnet synchronous motors is not limited to two as long as plural motors are used. Hereinafter, components and functions related to two motors are distinguished by using subscripts a and b so as to correspond to two motors.

In addition, in Fig. 1, electric power is transferred to and from an overhead wire 25 via a pantograph 24, and a current between the overhead wire side and the permanent magnet synchronous motor side can be cut off by a high-speed circuit breaker 23 and a line breaker 22. In addition, an LC filter circuit for smoothing a DC current that is configured using a filter reactor 21 and a filter capacitor 20 is provided between voltage generation devices 3a and 3b and the overhead wire 25.

A control device for drive control of the permanent magnet synchronous motors includes an integrated control unit 1 and sub control units 2a and 2b. Based on switching commands from the sub control units 2a and 2b, the voltage generation devices 3a and 3b output voltages, and obtain power by allowing the permanent magnet synchronous motors 4a and 4b to output predetermined torque.

A torque calculation unit 12 included in the integrated control unit 1 outputs torque command values $\tau_{m1}{}^{*}$ and $\tau_{m2}{}^{*}$ to be generated in the permanent magnet synchronous motors 4a and 4b to the sub control units 2a and 2b, respectively, in accordance with a power command $\tau_{m0}{}^{*}$ or a control mode switching command from a higher-level system control unit (not shown in the drawing).

Control programs for driving and controlling the permanent magnet synchronous motors 4a and 4b connected as loads are installed in the sub control units 2a and 2b. The sub control units 2a and 2b output switching commands $SW_1$ and $SW_2$ for outputting predetermined torque from the permanent magnet synchronous motors 4a and 4b. The voltage generation devices 3a and 3b perform switching control in response to the switching commands $SW_1$ and $SW_2$ and output voltages.

Here, Fig. 1 shows only the minimum functional blocks necessary for the first embodiment, and a power converter configured using power devices such as a driving transistor such as an IGBT (Insulated Gate Bipora Transistor) and a diode and a control configuration for the power converter are shown using the block diagrams of the voltage generation devices 3a and 3b, and detailed illustration thereof is omitted.

The permanent magnet synchronous motors 4a and 4b generate rotational torque by magnet torque generated by attraction and repulsion between a magnetic pole of a rotational magnetic field generated on the stator side by application of a three-phase AC voltage and a magnetic pole of a permanent magnet of a rotor, and reluctance torque generated by attraction force between the magnetic pole of the rotational magnetic field of the stator and a magnetic salient pole of the rotor.

Current detectors 5a and 5b detect waveforms of three-phase currents $I_{u1}$, $I_{v1}$, and $I_{w1}$ and $I_{u2}$, $I_{v2}$, and $I_{w2}$ of the U-phase, V-phase, and W-phase flowing in the permanent magnet synchronous motors 4a and 4b, respectively. However, it is not always necessary for the current detectors 5a and 5b to detect the currents of all the three phases, and any two phases among the three phases may be detected, and the remaining one phase may be obtained by calculation on the assumption that the three-phase currents are in an equilibrium state.

In addition, AC contactors 6a and 6b are provided between the voltage generation devices 3a and 3b and the permanent magnet synchronous motors 4a and 4b, and cut off the current when an abnormality occurs. Here, it is assumed that the AC contactors 6a and 6b open and close in accordance with control signals (not shown in the drawing) output from the integrated control unit 1 or the sub control units 2a and 2b.

The sub control units 2a and 2b estimate temperature information T1^ and T2^ of the permanent magnet synchronous motors 4a and 4b, respectively, by using the current detection values of the current detectors 5a and 5b, and transmit the same to the integrated control unit 1.

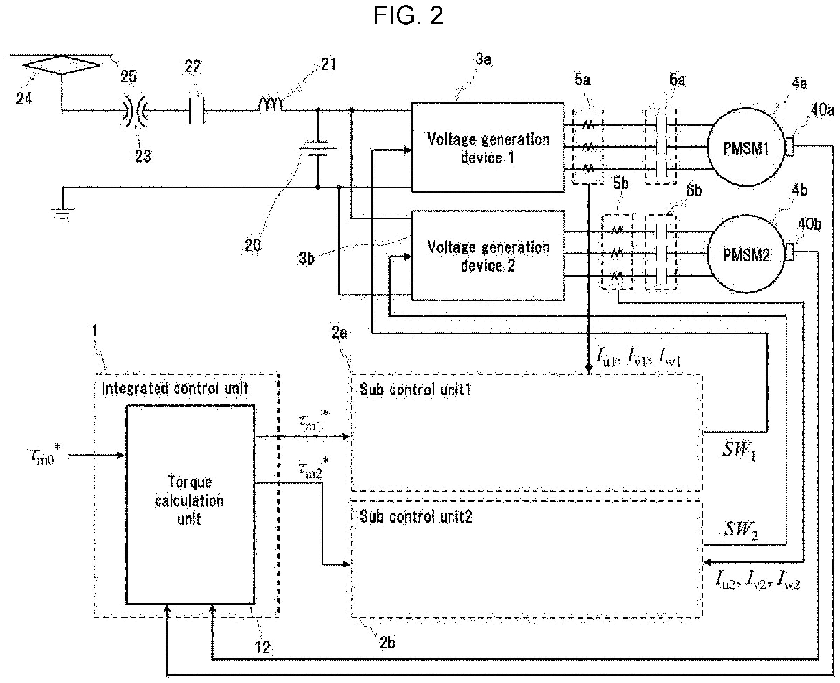

In addition, as a modified example of the first embodiment, Fig. 2 shows a configuration in which temperature detectors 40a and 40b are installed in the permanent magnet synchronous motors 4a and 4b to detect the temperature information T1^ and T2^. In the temperature detection, a frame temperature, a winding temperature, a permanent magnet temperature, or the like may be detected.

Hereinafter, the relationship between the temperature and efficiency of the permanent magnet synchronous motor that is the main point of the present invention will be described.

Losses generated in the permanent magnet synchronous motor can be largely classified into a copper loss, a mechanical loss, and an iron loss. When it is assumed for the permanent magnet synchronous motor that the input electric power is $P_{in}$, the output electric power is $P_{out}$, the torque is $\tau_m$, the copper loss is $W_s$, the iron loss is $W_i$, the mechanical loss is $W_m$, and the angular frequency of the mechanical angle of the dynamo-electric machine is $\omega_m$, the efficiency n of the permanent magnet synchronous motor is represented by Equation (1).

[Equation 1]

$$n = \frac{P_{out}}{P_{in}}$$
$$= \frac{\tau_m \cdot \omega_m}{\tau_m \cdot \omega_m + W_s + W_i + W_m} \tag{1}$$

In addition, the torque $\tau_m$ of the permanent magnet synchronous motor is represented by Equation (2).

[Equation 2]

$$\tau_m = m \cdot P_m \cdot K_e \cdot I_q + m \cdot P_m \cdot (L_d - L_q) \cdot I_d \cdot I_q \tag{2}$$

Here, m is the number of phases, $P_m$ is the number of pole pairs, $K_e$ is a magnet magnetic flux (power generation constant), $I_d$ is a d-axis current, $I_q$ is a q-axis current, $L_d$ is a d-axis inductance, and $L_q$ is a q-axis inductance.

The first term in Equation (2) is the above-described magnet torque (torque generated by attraction and repulsion between the magnetic pole of the rotational magnetic field and the magnetic pole of the permanent magnet of the rotor), and the second term in Equation (2) is the above-described reluctance torque (torque generated by attraction force between the magnetic pole of the rotational magnetic field of the stator and the magnetic salient pole of the rotor).

It is well known that since the magnet torque is determined by the product of the magnet magnetic flux $K_e$ and the q-axis current $I_q$, the magnet torque fluctuates due to the influence of the fluctuation of the magnet magnetic flux $K_e$, and the output torque increases or decreases. For example, a demagnetization of -0.1%/°C of the permanent magnet means that when the temperature rises by 10°C, the magnet magnetic flux $K_e$ decreases by 1%. That is, it is often considered that the low-temperature condition in which the magnet magnetic flux increases results in a more highly efficient operation because the output torque of molecules in Equation (1) increases.

In order to improve the efficiency of the drive system based on such an idea, for example, it is conceivable to supplement torque in the order in which the temperature of the dynamo-electric machine has a margin by applying the technique described in Patent Literature 2 for realizing high efficiency.

However, the inventors focused on the temperature dependency of the loss indicated by the denominator of Equation (1) based on detailed study, and found that the permanent magnet synchronous motor with a low temperature does not simply becomes high efficiency, but becomes high efficiency in different operation regions at low and high temperatures depending on the operating conditions of torque and frequency.

Hereinafter, outlines of the copper loss $W_s$, the mechanical loss $W_m$, and the iron loss $W_i$ and the temperature dependency thereof will be described.

The copper loss $W_s$ is a loss generated in a stator winding, and can be calculated from the current value flowing in the permanent magnet synchronous motor and the resistance value. Regarding the temperature dependency of the copper loss $W_s$, since the resistance value is changed in accordance with the temperature coefficient of a material used for the stator winding, the resistance value increases and the copper loss $W_s$ tends to increase as the temperature rises.

The mechanical loss $W_m$ is generated by a pressure loss due to a cooling fan provided in the rotor, friction of a bearing supporting the rotor at a frame of the permanent magnet synchronous motor, or the like, and can be generally calculated as a function of a drive frequency. Regarding the temperature dependency of the mechanical loss $W_m$, strictly speaking, although there is a change in the viscosity of grease used for a bearing, the change can be ignored in the dynamo-electric machine for railroad vehicles. Therefore, the mechanical loss $W_m$ of the dynamo-electric machine for railroad vehicles is often treated as not being affected by temperature.

The iron loss $W_i$ is a magnetic loss corresponding to the area of a hysteresis loop when the magnetic flux in a magnetic material used for a stator core or a rotor core is changed by applying an AC magnetic field, and is defined as the sum of a hysteresis loss and an eddy current loss and can be generally calculated as a function of magnetic flux density and a frequency. Regarding the temperature dependency of the iron loss $W_i$, the magnet magnetic flux itself largely affecting the iron loss in the permanent magnet synchronous motor has temperature dependency, and demagnetizes at, for example, about -0.1%/°C when the temperature rises as described above.

Further, the hysteresis loss in the iron loss $W_i$ is often considered to have substantially no temperature dependency. However, when the electric resistance of the iron core increases due to the temperature rise, the eddy current loss tends to decrease. Therefore, the iron loss $W_i$ in the permanent magnet synchronous motor tends to decrease as the temperature becomes higher.

As described above, in terms of the loss in the permanent magnet synchronous motor, when the temperature is low, the copper loss decreases and the iron loss increases, whereas when the temperature is high, the copper loss increases and the iron loss decreases. That is, since the copper loss and the iron loss have a trade-off relationship with respect to the temperature, when considering a change in the loss at the time of temperature change under certain operating conditions, the loss as a dynamo-electric machine differently decreases under low or high temperature conditions depending on the ratio of the iron loss to the copper loss.

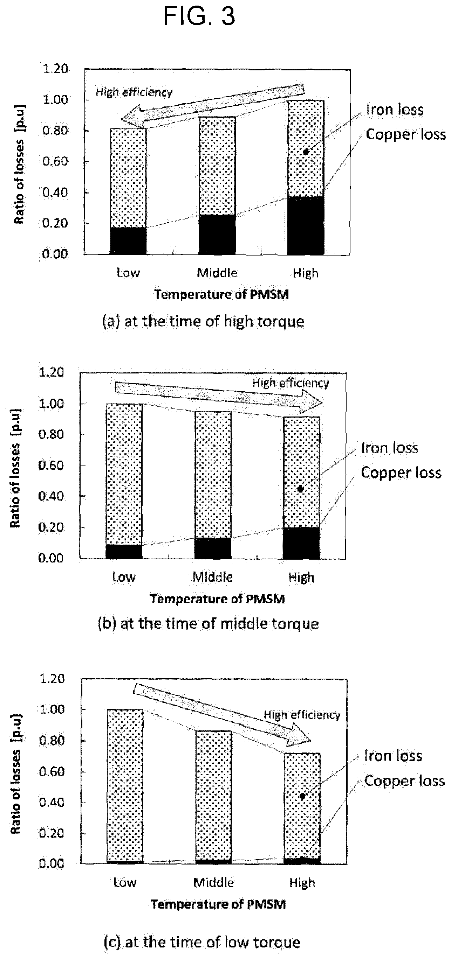

Figs. 3 are diagrams each showing the change characteristics of the ratio of the copper loss to the iron loss when the permanent magnet synchronous motors are driven at the same rotational speed and the torque and the temperature are changed.

Figs. 3(a), 3(b), and 3(c) show calculation results by magnetic field analysis at the time of high torque, at the time of middle torque, and at the time of low torque, respectively, and the current value is adjusted so that the output torque becomes the same even when the temperature is changed. In addition, the values in each drawing are normalized by the loss under the temperature condition where the total of the copper loss and the iron loss is maximized under each condition. Note that the resistance and the magnet temperature are assumed to be similarly changed.

At the time of high torque, as shown in Fig. 3(a), a large current flows under the operating condition of large torque, and thus the ratio of the copper loss becomes large with respect to Figs. 3(b) and 3(c). In addition, when the temperature rises, an increase in the copper loss becomes larger than a decrease in the iron loss, and when the temperature of the permanent magnet synchronous motor becomes lower, the efficiency becomes higher.

The condition at the time of middle torque is, as shown in Fig. 3(b), a condition where the load torque becomes smaller and the current becomes smaller than those in Fig. 3(a), and thus when the temperature of the dynamo-electric machine is higher, the efficiency becomes slightly higher.

The condition at the time of low torque an operating condition where the torque is substantially 0, and under such a condition, as shown in Fig. 3(c), the total of the copper loss and the iron loss can be reduced by nearly 30% when the temperature is high as compared to when the temperature is low.

That is, under the operating condition where the load torque is small, among the plurality of permanent magnet synchronous motors, the torque command value of the permanent magnet synchronous motor with a high temperature is intentionally increased, whereas the torque command value of the permanent magnet synchronous motor with a low temperature is decreased, so that it can be understood that the permanent magnet synchronous motors can be driven with high efficiency as a whole.

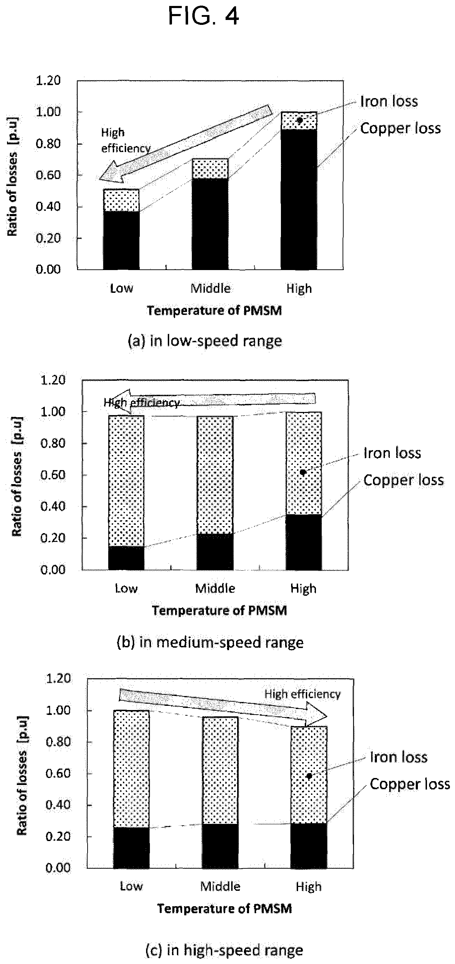

Figs. 4 are diagrams each showing the change characteristics of the ratio of the copper loss to the iron loss when the permanent magnet synchronous motors are driven with the same torque and the rotational speed and the temperature are changed.

Figs. 4(a), 4(b), and 4(c) show calculation results by magnetic field analysis in a low-speed range, in a medium-speed range, and in a high-speed range, respectively, and the current is adjusted so that the output torque becomes the same even when the temperature is changed. In addition, the values in each drawing are normalized by the loss under the temperature condition where the total of the copper loss and the iron loss is maximized under each condition. Note that the resistance and the magnet temperature are assumed to be similarly changed.

In the low-speed range, as shown in Fig. 4(a), the iron loss is small and the ratio of the copper loss accordingly becomes relatively higher in the operating condition where the rotational speed is low. In addition, when the temperature rises, an increase in the copper loss becomes larger than a decrease in the iron loss, and when the temperature of the permanent magnet synchronous motor becomes lower, the efficiency becomes higher.

The condition in the medium-speed range is, as shown in Fig. 4(b), is a condition where the rotational speed is higher and the ratio of the iron loss becomes relatively larger than those in Fig. 4(a), and thus is a region where the efficiency is not substantially changed even when the temperature of the dynamo-electric machine is changed.

In the high-speed range, the rotational speed is higher than that in Fig. 4(b), and under such a condition, as shown in Fig. 4(c), the total of the copper loss and the iron loss can be reduced by nearly 10% when the temperature is high as compared to when the temperature is low.

That is, in an example not forming part of the invention, under the condition where the rotational speed is high, among the plurality of permanent magnet synchronous motors, the torque command value of the permanent magnet synchronous motor with a high temperature is intentionally increased, whereas the torque command value of the permanent magnet synchronous motor with a low temperature is decreased, so that it can be understood that the permanent magnet synchronous motors can be driven with high efficiency as a whole.

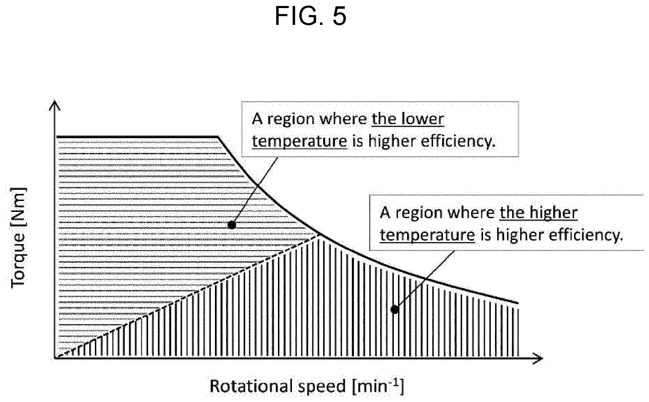

Fig. 5 is a diagram for showing an example of an operation region where the permanent magnet synchronous motor becomes highly efficient when the temperature of the permanent magnet synchronous motor is higher or lower than a reference value with respect to the speed (horizontal axis) and the torque (vertical axis).

As shown in Figs. 3, when the median value of the specification range of temperatures is used as a reference, the region of high efficiency due to temperatures has a boundary with respect to the torque. In other words, when power is obtained by using at least two or more permanent magnet synchronous motors, the high efficiency of the system can be realized by changing the distribution of the torque command values so as to maximize the total efficiency in accordance with the temperature and torque.

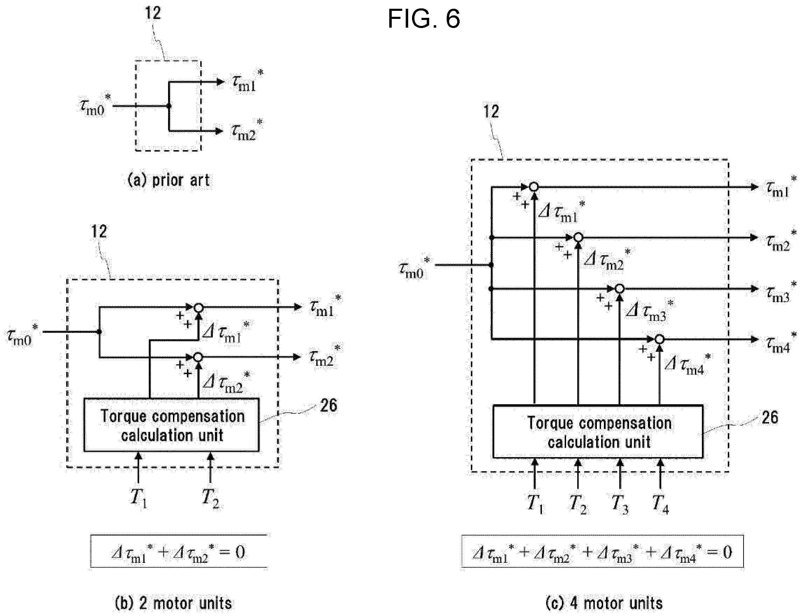

Here, Figs. 6 are diagrams each showing an example of functional blocks of the torque calculation unit 12 provided in the integrated control unit 1 shown in Fig. 1.

Specifically, the torque command values $\tau_{m1}*$ and $\tau_{m2}*$ shown in Fig. 1 will be described using Figs. 6. As shown in Figs. 6(b) and 6(c), the torque calculation unit 12 is configured by using torque operation amount calculation units 26, and outputs the torque command value by adding a torque operation amount to the power command $\tau_{m0}*$ in accordance with a map indicating the efficiency of the permanent magnet synchronous motor at the time of temperature change or a calculation formula for obtaining the efficiency. The map indicating the efficiency or the calculation formula for obtaining the efficiency is derived from measured values or magnetic field analysis, and is recorded in a storage device (not shown in the drawing) appropriately provided in the integrated control unit 1 or the torque calculation unit 12.

For example, when being applied to two motor units, as shown in (b), the torque command values $\tau_{m1}*$ and $\tau_{m2}*$ are calculated by adding $\Delta\tau_{m1}*$ and $\Delta\tau_{m2}*$ to the power command $\tau_{m0}*$.

In addition, when being applied to four motor units, as shown in (c), the torque command values $\tau_{m1}*$, $\tau_{m2}*$, $\tau_{m3}*$, and $\tau_{m4}*$ are calculated by adding $\Delta\tau_{m1}*$, $\Delta\tau_{m2}*$, $\Delta\tau_{m3}*$, and $\Delta\tau_{m4}*$ to the power command $\tau_{m0}*$.

The torque operation amount calculation units 26 discriminate the permanent magnet synchronous motor with high efficiency based on each of the temperature estimated values of the permanent magnet synchronous motors, and determines the torque operation amount from the discrimination result. However, in order not to change the total amount of torque output from the drive system with respect to the conventional configuration shown in Fig. 6 (a), as shown in Fig. 6 (b) or 6(c), the sum of torque compensation amounts is adjusted so as to be approximately 0 ($\Delta\tau_{m1}*+\Delta\tau_{m2}*=0$ or $\Delta\tau_{m1}*+\Delta\tau_{m2}*+\Delta\tau_{m3}*+\Delta\tau_{m4}*=0$), in other words, the total amount of the torque command values in the drive system is adjusted so as to be approximately constant.

Here, the calculation of the operation amounts of the torque command values $\Delta\tau_{m1}*$ to $\Delta\tau_{m4}*$ shown in Figs. 6 and the compensation method thereof are merely examples, and if the configuration is such that each of the torque operation amounts is adjusted in accordance with the speed and the frequency in consideration of the temperature dependency of the dynamo-electric machine, the present invention is not limited that shown in Fig. 6.

In addition, although the example of operating the torque command values is shown in the first embodiment, a configuration of operating the current command values or the voltage command values corresponding to the torque command values may be employed.

However, there is a concern that the temperature rises by actively using the dynamo-electric machine with a high temperature at the time of low torque or in the high-speed range. However, since a railroad vehicle does not continue a normal operation at the same frequency or the torque operating point and repeats stop, acceleration, deceleration, and stop operations, only the dynamo-electric machine with a high temperature is not unevenly driven, and thus abnormal heat generation or the like does not occur. However, when it is predicted that the temperature exceeds a temperature allowance value considering the irreversible demagnetization of the permanent magnet, a limiter for temperature is provided to stop the compensation without increasing the torque command value of the dynamo-electric machine with a high temperature.

On the other hand, in the case (not forming part of the invention) of a drive system using an induction motor as the dynamo-electric machine, since no permanent magnet is used as the dynamo-electric machine, the magnetic flux does not decrease when the temperature rises. Therefore, the iron loss (magnetic loss excluding the secondary copper loss generated in the rotor) becomes approximately constant regardless of the temperature. In other words, in the case of the induction motor, the total efficiency of the drive system can be improved by simply increasing the distribution of the torque commands to the dynamo-electric machine (induction motor) with a low temperature.

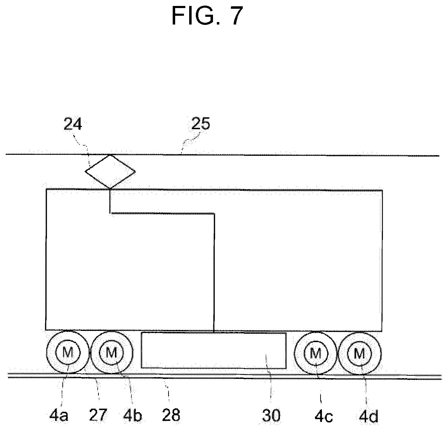

Fig. 7 is a diagram for showing an outline configuration of a part of a railroad vehicle on which the drive device for the permanent magnet synchronous motor according to the present invention is mounted. A plurality of permanent magnet synchronous motors 4a, 4b, 4c, and 4d driven by an inverter 30 is coupled to axles of the railroad vehicle via reduction gears (not shown in the drawing). The railroad vehicle travels by tangential force generated between wheels 27 connected to the axles and rails 28.

In the railroad vehicle, the temperature varies depending on each dynamo-electric machine because control of changing the distribution of torque for each shaft with respect to the travel direction is used due to a change in the center of gravity according to the travel direction, because of the influence of the way the traveling wind blows against the dynamo-electric machine, and because of the influence of the state of defacement of a ventilation duct of the dynamo-electric machine. Therefore, by applying the present invention to a railroad vehicle, it is possible to obtain an effect of improving the efficiency of the drive system of the railroad vehicle.

As described above, in the first embodiment, it is possible to improve the total efficiency of a plurality of permanent magnet synchronous motors by individually changing the torque operation amount in consideration of the temperature dependency of each permanent magnet synchronous motor.

[Second Embodiment]

A second embodiment is different from the first embodiment in that an estimated magnet temperature at the time of zero-torque control during driving under sensorless control is used as the temperature information of the permanent magnet synchronous motor. Accordingly, the temperature sensors shown in Fig. 2 are not necessary, and the temperature of the permanent magnet can be robustly estimated against the constant error of the inductance and resistance of the permanent magnet synchronous motor.

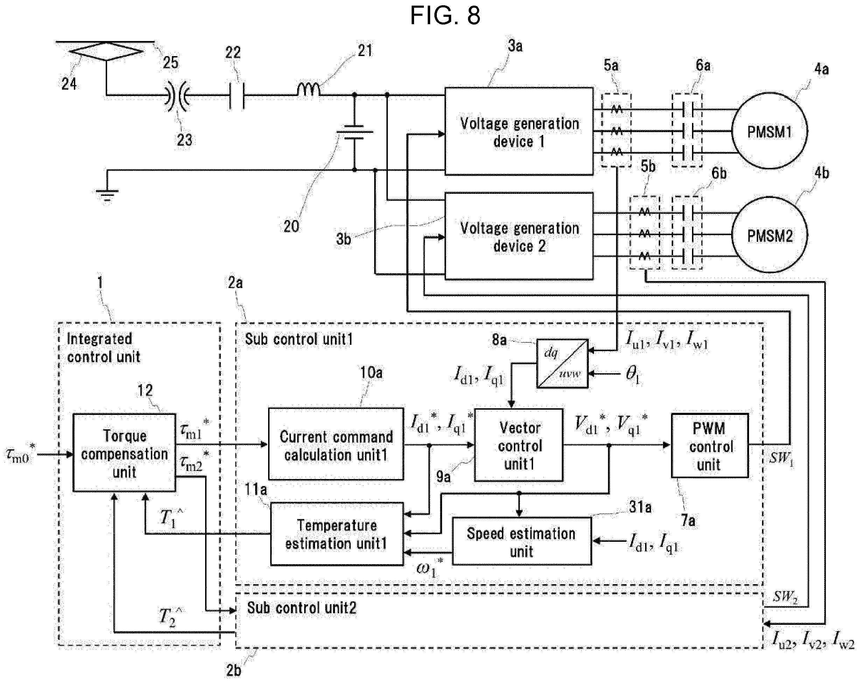

Fig. 8 is a diagram for showing an example of functional blocks of a drive device for a permanent magnet synchronous motor according to a second embodiment.

The sub control unit 2a of the second embodiment includes a PWM control unit 7a, a coordinate converter 8a, a vector control unit 9a, a current command calculation unit 10a, a temperature estimation unit 11a, and a speed estimation unit 31a.

The current command calculation unit 10a outputs current command values $I_{d1}{}^*$ and $I_{q1}{}^*$ based on a torque command value $\tau_{m1}{}^*$ from the integrated control unit 1.

The coordinate converter 8a converts three-phase currents $I_{u1}$, $I_{v1}$, and $I_{w1}$ of a permanent magnet synchronous motor 3 detected by the current detector 5a into dq coordinates of the rotating coordinate system by using a phase angle $\theta_1$, and outputs the same to the vector control unit 9a as $I_{d1}$ and $I_{q1}$.

The vector control unit 9a outputs voltage command values $V_{d1}{}^*$ and $V_{q1}{}^*$ so as to converge the current deviation to 0 by PI (Proportional-Integral) control or the like so that a d-axis current detection value $I_{d1}$ and a q-axis current detection value $I_{q1}$ match $I_{d1}{}^*$ and $I_{q1}{}^*$, respectively.

The PWM control unit 7a outputs a switching command $SW_1$ for controlling the voltage generation device 3a based on the voltage command values $V_{d1}{}^*$ and $V_{q1}{}^*$.

The speed estimation unit 31a estimates the angular frequency $\omega_1{}^*$ of the rotor based on the current detection values $I_{d1}$ and $I_{q1}$ and the voltage command values $V_{d1}{}^*$ and $V_{q1}{}^*$.

The temperature estimation unit 11a outputs a magnet temperature estimated value $T_1{}^\wedge$ or a magnet magnetic flux estimated value $K_{e1}{}^\wedge$ based on the current command values $I_{d1}{}^*$ and $I_{q1}{}^*$ or the current detection values $I_{d1}$ and $I_{q1}$, the voltage command values $V_{d1}{}^*$ and $V_{q1}{}^*$, and the angular frequency $\omega_1{}^*$. The magnet temperature and the magnet magnetic flux are calculated at a rate of -0.1%/°C with respect to a reference value, and either of them may be output as an estimated value. The magnet magnetic flux estimated value $K_{e1}{}^\wedge$ will be used in the following description.

In addition, since the block diagram inside the sub control unit 2b has the same configuration as that of the sub control unit 2a, the illustration thereof is omitted.

Hereinafter, the principle of estimating the temperature of the permanent magnet with high accuracy will be described. The voltage equations of the permanent magnet synchronous motor are represented by the following equations (3) and (4).

[Equation 3]

$$v_{\mathrm{d}} = r_1 \cdot i_{\mathrm{d}} + L_{\mathrm{d}} \cdot \frac{d}{dt} i_{\mathrm{d}} - \omega_1 \cdot L_{\mathrm{q}} \cdot i_{\mathrm{q}} \qquad (3)$$

[Equation 4]

$$v_{\mathrm{q}} = r_1 \cdot i_{\mathrm{q}} + L_{\mathrm{q}} \cdot \frac{d}{dt} i_{\mathrm{q}} + \omega_1 \cdot L_{\mathrm{d}} \cdot i_{\mathrm{d}} + \omega_1 \cdot K_{\mathrm{e}} \qquad (4)$$

If it is assumed that the state quantities of the actual voltage, current, resistance value, and inductance of the permanent magnet synchronous motor can be accurately grasped, the estimated value $K_{\mathrm{e}}{}^\wedge$ of the magnetic flux can be calculated by Equation (5).
[Equation 5]

8

$$K_e^\wedge = (v_q - r_1 \cdot i_q - L_q \cdot \frac{d}{dt} i_q - \omega_1 \cdot L_d \cdot i_d)/\omega_1 \qquad (5)$$

Considering the calculation of the constant $K_e^\wedge$ of the magnet magnetic flux in accordance with Equation (5), the voltage command values $v_d^*$ and $v_q^*$ of the voltage generation device 3 may be referred to for the voltages $v_d$ and $v_q$, and the current detection values $i_d$ and $i_q$ may be used for the currents. However, since a resistance $r_1$ and inductances $L_d$ and $L_q$ depend on the winding temperature of the permanent magnet synchronous motor, the magnetic saturation characteristics of a magnetic material used for the iron core, the motor structure, and the current conditions, it is difficult to accurately grasp them.

Thus, in order to estimate the magnet magnetic flux $K_e$ without being affected by the constant error, the inventors have found that the magnet magnetic flux $K_e$ can be estimated without being affected by the constant errors of the resistance $r_1$ and the inductances $L_d$ and $L_q$ by using the voltage command value $v_q^*$ and the angular frequency $\omega_1^*$ in a control-stabilized state in a state where the torque shown in Equation (2) is controlled to be 0 while intentionally setting the current command values $I_{d1}^*$ and $I_{q1}^*$ of the d-axis and the q-axis to 0.

In Equations (2) and (3), when the current command values $I_d^*$ and $I_q^*$ are set to 0 and the error of the current control by the vector control unit 10 is regarded as 0, the voltage command values $V_d^*$ and $v_q^*$ in a settled state are represented by the following equations (6) and (7).
[Equation 6]

$$v_d^* = 0 \qquad (6)$$

[Equation 7]

$$v_q^* = \omega_1^* \cdot K_e \qquad (7)$$

That is, the estimated value $K_e^\wedge$ of the magnet magnetic flux can be calculated by the following equation (8).
[Equation 8]

$$K_e^\wedge = v_q^*/\omega_1^* \qquad (8)$$

When the current command values $I_d^*$ and $I_p^*$ are set to 0 and the error by the current control is 0, the voltage command value $V_q^*$ of the q-axis is put in a state of outputting a voltage to cancel an induced voltage by the actual magnet magnetic flux $K_e$. Accordingly, it can be understood that Equation (7) does not include the terms of the resistance $r_1$ and the inductances $L_d$ and $L_q$, and the voltage command value $v_q^*$ can be calculated only by $\omega_1^*$ and $K_e$.

In addition, when a case in which the magnet magnetic flux fluctuates at the same frequency is exemplified, according to Equation (7), when the temperature of the permanent magnet rises and the actual magnet magnetic flux $K_e$ decreases, $V_q^*$ in a settled state also decreases. On the other hand, when the temperature of the permanent magnet is lowered and the actual magnet magnetic flux $K_e$ increases, $V_q^*$ in a settled state also increases. Thus, the magnet magnetic flux $K_e$ can be estimated based on the q-axis voltage command value $v_q^*$ when the current command values $I_d^*$ and $I_q^*$ are set to 0. However, according to Equation (8), the estimation method of the second embodiment cannot be applied in principle under the condition that the rotor speed $\omega_1$ of the permanent magnet synchronous motor is 0.

Here, in the estimation method of the second embodiment, since it is necessary that the current deviation by the current control is 0, the drive control is performed by setting the current command values $I_d^*$ and $I_q^*$ to 0, and the q-axis voltage command value $V_q^*$ and the angular frequency command value $\omega_1^*$ in a state where the control is settled are used. In addition, in order to eliminate the influence of noise, a filtering process, a moving average process, or an integration process may be performed.

Next, the estimation of the magnet magnetic flux to be executed in the zero-torque control period is executed by using the zero-torque control period before the torque rising when the permanent magnet synchronous motor is restarted from the gate off and the free-run (coasting) of the rotor, or by using the zero-torque control period immediately before the gate off after the torque falling.

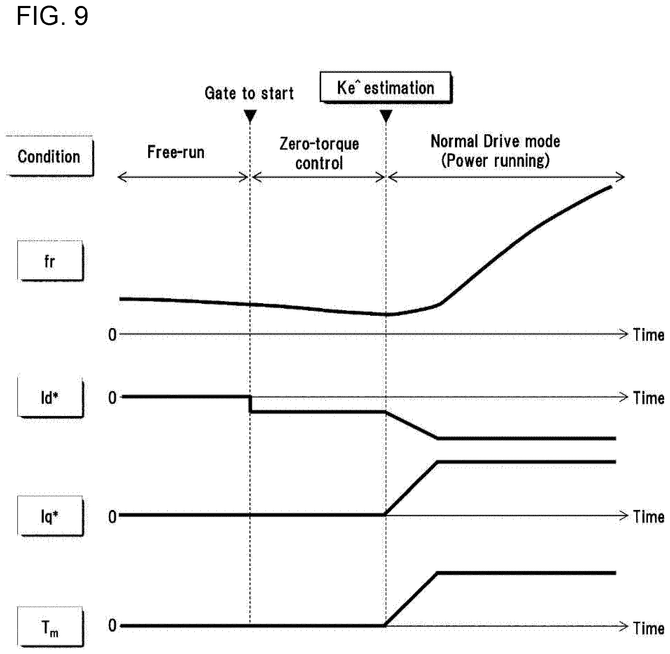

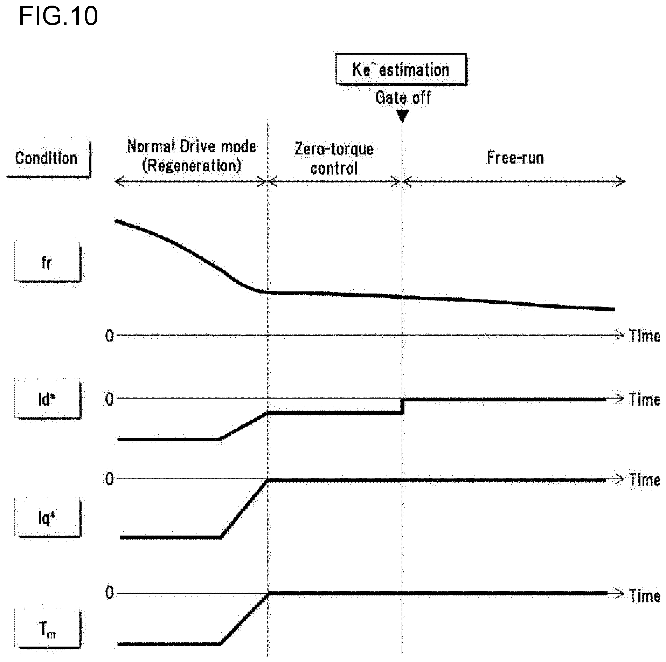

Fig. 9 is a diagram for showing a time flow in which the magnet magnetic flux is estimated during a zero-torque control period before the torque rising at the time of coasting restart. In addition, Fig. 10 is a diagram for showing a time flow in which the magnet magnetic flux is estimated during the zero-torque control period immediately before the gate off after the torque falling.

However, at the time of the zero-torque command, the current need not be exactly 0, and a minute d-axis current may flow. In the voltage generation devices 3a and 3b, since a period in which upper and lower output elements are simultaneously turned off is provided in order to prevent short-circuit of elements such as IGBTs included in upper and lower arms provided in each phase, the output voltage during the simultaneous turning-off period becomes insufficient when voltage compensation is not applied. Therefore, a well-known dead time compensation technique is used to compensate the voltage command value so as to output the voltage in accordance with the command value based on the polarity of the current detection value or the current command value.

In particular, in a low speed region where the induced voltage of the permanent magnet synchronous motor is low and the modulation rate is low, a number of voltage pulses having a narrow width are output, so that the ratio of the simultaneous turning-off period to the output voltage becomes relatively large, and the influence on the output voltage is likely to become large.

That is, when both of the d-axis current command value $I_d{}^*$ and the q-axis current command value $I_q{}^*$ shown in the first embodiment are set to 0 in the low speed region, if the polarity of the current detection value or the current command value used for the dead time compensation cannot be accurately grasped and the voltage is compensated based on the incorrect polarity as described above, the voltage error is adversely increased by the dead time compensation, and there is a possibility of deteriorating the estimation accuracy.

In response to this, a minute value is intentionally given to the d-axis current command value while setting the q-axis current command value to 0, so that the polarity of the current command value or the current detection value can be determined. Accordingly, even at the time of the zero-torque command, the polarity of the current can be discriminated, the dead time compensation can be accurately operated, and the voltage output accuracy can be improved.

However, as shown in Equation (10), the magnitude of the minute current command value $I_d$ is set so that the magnetic flux (product of $L_d$ and $I_d$) due to the armature reaction is about 1/5 or less of the magnet magnetic flux $K_e$ so as not to be affected by the constant error of the d-axis inductance $L_d$. For example, in the case of 1/5 or less, the magnitude of the minute current command value $I_d{}^*$ may be set in the range of Equation (11) with respect to the set value (reference value) $K_e{}^*$ of the power generation constant and the d-axis inductance $L_d{}^*$ set in the controller.

[Equation 9]

$$K_e^{\wedge} = (\mathrm{v}_q^* - \omega_1^* \cdot L_d^* \cdot i_\mathrm{d})/\omega_1^* \tag{9}$$

[Equation 10]

$$K_e \gg L_\mathrm{d} \cdot i_\mathrm{d} \tag{10}$$

[Equation 11]

$$i_d^* \le K_e^*/(5 \cdot L_d^*) \tag{11}$$

As described above, in the second embodiment, temperature information can be obtained with high accuracy without using a temperature sensor by calculating the magnet temperature (or the magnet magnetic flux) in a period in which the torque command value in the sensorless control is controlled to 0. In addition, the second embodiment can accurately distribute the allocation of the torque operation amount described in the first embodiment, and can further improve the efficiency and simplify the system as compared to the first embodiment.

List of Reference Signs

1     integrated control unit
2     sub control unit
3     voltage generation device
4     permanent magnet synchronous motor
5     current detector
6     AC contactor
7     PWM control unit
8     coordinate converter

9       vector control unit
10      current command calculation unit
11      magnet temperature estimation unit
12      torque command calculation unit
20      filter capacitor
21      filter reactor
22      line breaker
23      high-speed circuit breaker
24      pantograph
25      overhead wire
26      torque compensation calculation unit
27      wheel
28      rail
30      inverter
31      speed estimation calculation unit
40      temperature detector


**Claims**

1.  A drive device for a dynamo-electric machine, comprising:

    a plurality of voltage generation devices (3) for outputting arbitrary voltages to a plurality of dynamo-electric machines (4); and
    a control device (1) for adjusting the output voltages of the voltage generation devices (3),
    wherein the control device (1) is configured to acquire the temperature of each of the plurality of dynamo-electric machines (4), to select a relatively highly-efficient dynamo-electric machine from among the plurality of dynamo-electric machines (4) based on each temperature, and to increase a torque command value of the selected dynamo-electric machine relative to the plurality of other dynamo-electric machines (4) ;
    **characterized in that** the dynamo-electric machines (4) are permanent magnet synchronous motors (4), and wherein the control device (1) is configured to select a motor with a relatively low temperature among the plurality of permanent magnet synchronous motors (4) when the torque command value is large, and is configured to select a motor with a relatively high temperature among the plurality of permanent magnet synchronous motors (4) when the torque command value is small.

2.  The drive device for a dynamo-electric machine according to claim 1,
    wherein the torque command value of each dynamo-electric machine (4) is adjustable such that the total amount of the torque command values of the plurality of dynamo-electric machines (4) remains approximately constant.

3.  The drive device for a dynamo-electric machine according to any one of claims 1 to 2,
    wherein the control device (1) is configured to record a map indicating the efficiency of each permanent magnet synchronous motor at the time of temperature changes of the permanent magnet synchronous motors (4) or a calculation formula for obtaining the efficiency, and to select a relatively highly-efficient motor from among the plurality of permanent magnet synchronous motors (4) against the temperature changes of the permanent magnet synchronous motors (4) based on the map or the calculation formula.

4.  The drive device for a dynamo-electric machine according to any one of claims 1 to 3,
    Wherein the control device (1) is configured to not increase the torque command value of the permanent magnet synchronous motor with a high temperature when the temperature exceeds a preset allowable temperature in a high speed region or a low torque region of the permanent magnet synchronous motor.

5.  The drive device for a dynamo-electric machine according to any one of claims 1 to 4,
    wherein the temperature estimated value of a permanent magnet in a rotor of the permanent magnet synchronous motor is used as the temperature.

6.  The drive device for a dynamo-electric machine according to claim 5,
    wherein the control device (1) is configured to estimate the temperature or an amount of magnetic flux of the permanent magnet by using a period of driving while setting the torque command value for the permanent magnet synchronous motor to approximately 0.

7.  The drive device for a dynamo-electric machine according to claim 6,
    wherein when the direction of a magnetic pole formed by the permanent magnet in the rotor is a d-axis, the direction orthogonal to the d-axis by an electric angle is a q-axis, a set value of inductance in the d-axis and a set value of the magnet magnetic flux in the control device are $L_d^*$ and $K_e^*$, respectively, and a current command value of the d-axis is $i_d^*$, substantially 0 of the torque command value means that the current command value of the q-axis is 0 and the current command value $i_d^*$ of the d-axis is

$$i_d^* \leq K_e^*/(5 \cdot L_d^*)$$

8.  The drive device for a dynamo-electric machine according to claim 6 or 7,
    wherein the control device (1) is configured to estimate the temperature or an amount of magnetic flux during a period of setting the torque command value to 0 provided before rising the torque command value at the time of coasting restart, wherein the estimate is based on the time the voltage output to the permanent magnet synchronous motor is stopped and the free-run state of the rotor of the permanent magnet synchronous motor.

9.  The drive device for a dynamo-electric machine according to any one of claims 6 to 8,
    wherein when the rotor speed of the permanent magnet synchronous motor is a predetermined value or larger after the torque command value is narrowed down to 0, the control device (1) is configured to estimate the temperature or the amount of magnetic flux in a period of driving while setting the torque command value to 0.

10. A railroad vehicle wherein the drive device for a dynamo-electric machine according to any one of claims 1 to 9 is mounted and the dynamo-electric machine is a motor for driving wheels.

11. A method for driving a dynamo-electric machine, comprising:

    acquiring temperature information of each of a plurality of dynamo-electric machines (4) driven by a plurality of voltage generation devices (3) for outputting arbitrary voltages,
    selecting a relatively highly-efficient dynamo-electric machine from among the plurality of dynamo-electric machines (4) based on each temperature information, and
    increasing a torque command value of the selected dynamo-electric machine relative to the plurality of other dynamo-electric machines (4);
    **characterized in that** the dynamo-electric machines are permanent magnet synchronous motors (4), and wherein a motor with a relatively small value of the temperature information is selected among the plurality of permanent magnet synchronous motors (4) when the torque command value is large, and a motor with a relatively large value of the temperature information is selected among the plurality of permanent magnet synchronous motors (4) when the torque command value is small.

12. The method for driving a dynamo-electric machine according to claim 11,
    wherein the torque command value of each dynamo-electric machine (4) is adjustable such that the total amount of the torque command values of the plurality of dynamo-electric machines (4) remains approximately constant.

**Patentansprüche**

1.  Antriebsvorrichtung für eine dynamoelektrische Maschine, Folgendes umfassend:

    eine Vielzahl von Spannungserzeugungsvorrichtungen (3) zum Ausgeben von beliebigen Spannungen an eine Vielzahl von dynamoelektrischen Maschinen (4); und
    eine Steuervorrichtung (1) zum Anpassen der Ausgangsspannungen der Spannungserzeugungsvorrichtungen (3);
    wobei die Steuervorrichtung (1) dazu ausgelegt ist, die Temperatur von jeder aus der Vielzahl von dynamoelektrischen Maschinen (4) zu erfassen, um eine relativ hocheffiziente dynamoelektrische Maschine aus der Vielzahl von dynamoelektrischen Maschinen (4) beruhend auf jeder Temperatur auszuwählen und einen Drehmomentbefehlswert der ausgewählten dynamoelektrischen Maschine relativ zur Vielzahl von anderen dynamoelektrischen Maschinen (4) zu erhöhen;

**dadurch gekennzeichnet, dass** die dynamoelektrischen Maschinen (4) Permanentmagnetsynchronmotoren (4) sind, und
wobei die Steuervorrichtung (1) dazu ausgelegt ist, einen Motor mit relativ geringer Temperatur aus der Vielzahl von Permanentsynchronmotoren (4) auszuwählen, wenn der Drehmomentbefehlswert hoch ist, und dazu ausgelegt ist, einen Motor mit relativ hoher Temperatur aus der Vielzahl von Permanentsynchronmotoren (4) auszuwählen, wenn der Drehmomentbefehlswert gering ist.

2. Antriebsvorrichtung für eine dynamoelektrische Maschine nach Anspruch 1,
wobei der Drehmomentbefehlswert jeder dynamoelektrischen Maschine (4) derart anpassbar ist, dass das Gesamtausmaß der Drehmomentbefehlswerte der Vielzahl von dynamoelektrischen Maschinen (4) annähernd konstant bleibt.

3. Antriebsvorrichtung für eine dynamoelektrische Maschine nach einem der Ansprüche 1 bis 2,
wobei die Steuervorrichtung (1) dazu ausgelegt ist, eine Karte, die die Effizienz jedes Permanentmagnetsynchronmotors zum Zeitpunkt von Temperaturänderungen der Permanentmagnetsynchronmotoren (4) angibt, oder eine Berechnungsformel zum Erhalten der Effizienz aufzuzeichnen und einen relativ hocheffizienten Motor aus der Vielzahl von Permanentmagnetsynchronmotoren (4) gegen die Temperaturänderungen der Permanentmagnetsynchronmotoren (4) beruhend auf der Karte oder der Berechnungsformel auszuwählen.

4. Antriebsvorrichtung für eine dynamoelektrische Maschine nach einem der Ansprüche 1 bis 3,
wobei die Steuervorrichtung (1) dazu ausgelegt ist, den Drehmomentbefehlswert des Permanentmagnetsynchronmotors bei einer hohen Temperatur nicht zu erhöhen, wenn die Temperatur eine voreingestellte zulässige Temperatur in einem Hochdrehzahlbereich oder einem Niedrigdrehmomentbereich des Permanentmagnetsynchronmotors übersteigt.

5. Antriebsvorrichtung für eine dynamoelektrische Maschine nach einem der Ansprüche 1 bis 4,
wobei der temperaturgeschätzte Wert eines Permanentmagneten in einem Rotor des Permanentmagnetsynchronmotors als die Temperatur verwendet wird.

6. Antriebsvorrichtung für eine dynamoelektrische Maschine nach Anspruch 5,
wobei die Steuervorrichtung (1) dazu ausgelegt ist, die Temperatur oder eine Stärke eines Magnetflusses des Permanentmagneten zu schätzen, indem sie eine Antriebszeitspanne verwendet, während der Drehmomentbefehlswert für den Permanentmagnetsynchronmotor auf annähernd 0 eingestellt wird.

7. Antriebsvorrichtung für eine dynamoelektrische Maschine nach Anspruch 6,
wobei, wenn die Richtung eines Magnetpols, ausgebildet durch den Permanentmagneten im Rotor, eine d-Achse ist, die Richtung um einen elektrischen Winkel orthogonal zur d-Achse eine q-Achse ist, ein eingestellter Induktanzwert in der d-Achse und ein eingestellter Wert des Magnetflusses des Magneten in der Steuervorrichtung jeweils $L_d^*$ bzw. Ke* sind und ein Strombefehlswert der d-Achse $i_d^*$ ist, im Wesentlichen 0 des Drehmomentbefehlswerts bedeutet, dass der Strombefehlswert der q-Achse 0 ist und der Strombefehlswert $i_d^*$ der d-Achse $i_d^* \leq K_e^*/(5 \cdot L_d^*)$ ist.

8. Antriebsvorrichtung für eine dynamoelektrische Maschine nach Anspruch 6 oder 7,
wobei die Steuervorrichtung (1) dazu ausgelegt ist, die Temperatur oder eine Stärke des Magnetflusses während einer Zeitspanne des Einstellens des Drehmomentbefehlswerts auf 0 zu schätzen, welche vor dem Anheben des Drehmomentbefehlswerts zum Zeitpunkt des Schubbetriebwiederanlaufs bereitgestellt wird, wobei die Schätzung auf der Dauer, für welche die Spannungsausgabe für den Permanentmagnetsynchronmotor angehalten ist, und dem Freilaufzustand des Rotors des Permanentmagnetsynchronmotors beruht.

9. Antriebsvorrichtung für eine dynamoelektrische Maschine nach einem der Ansprüche 6 bis 8,
wobei, wenn die Rotordrehzahl des Permanentmagnetsynchronmotors ein vorbestimmter Wert oder größer ist, nachdem der Drehmomentbefehlswert auf 0 gesenkt wurde, die Steuervorrichtung (1) dazu ausgelegt ist, die Temperatur oder die Stärke des Magnetflusses in einer Antriebszeitspanne zu schätzen, während der Drehmomentbefehlswert auf 0 eingestellt wird.

10. Schienenfahrzeug, wobei die Antriebsvorrichtung für eine dynamoelektrische Maschine nach einem der Ansprüche 1 bis 9 montiert ist und die dynamoelektrische Maschine ein Motor zum Antreiben von Rädern ist.

**11.** Verfahren zum Antreiben einer dynamoelektrischen Maschine, Folgendes umfassend:

Erfassen von Temperaturinformationen von jeder aus der Vielzahl von dynamoelektrischen Maschinen (4), die von einer Vielzahl von Spannungserzeugungsvorrichtungen (3) zum Ausgeben von beliebigen Spannungen angetrieben werden,
Auswählen einer relativ hocheffizienten dynamoelektrischen Maschine aus der Vielzahl von dynamoelektrischen Maschinen (4) beruhend auf jeder Temperaturinformation und
Erhöhen eines Drehmomentbefehlswerts der ausgewählten dynamoelektrischen Maschine relativ zur Vielzahl von anderen dynamoelektrischen Maschinen (4) und
**dadurch gekennzeichnet, dass** die dynamoelektrischen Maschinen Permanentmagnetsynchronmotoren (4) sind, und
wobei ein Motor mit relativ geringem Temperaturinformationswert aus der Vielzahl von Permanentsynchronmotoren (4) ausgewählt wird, wenn der Drehmomentbefehlswert hoch ist, und ein Motor mit relativ hohem Temperaturinformationswert aus der Vielzahl von Permanentsynchronmotoren (4) ausgewählt wird, wenn der Drehmomentbefehlswert gering ist.

**12.** Verfahren zum Antreiben einer dynamoelektrischen Maschine nach Anspruch 11,
wobei der Drehmomentbefehlswert jeder dynamoelektrischen Maschine (4) derart einstellbar ist, dass das Gesamtausmaß der Drehmomentbefehlswerte der Vielzahl von dynamoelektrischen Maschinen (4) annähernd konstant bleibt.

**Revendications**

**1.** Dispositif d'entraînement pour une machine dynamoélectrique, comprenant :

une pluralité de dispositifs de génération de tension (3) destinés à fournir des tensions arbitraires à une pluralité de machines dynamoélectriques (4) ; et
un dispositif de commande (1) destiné à ajuster les tensions de sortie des dispositifs de génération de tension (3), dans lequel le dispositif de commande (1) est configuré pour acquérir la température de chacune de la pluralité de machines dynamoélectriques (4), pour sélectionner une machine dynamoélectrique relativement très efficiente parmi la pluralité de machines dynamoélectriques (4) sur la base de chaque température, et pour augmenter une valeur de commande de couple de la machine dynamoélectrique sélectionnée par rapport à la pluralité d'autres machines dynamoélectriques (4) ;
**caractérisé en ce que** les machines dynamoélectriques (4) sont des moteurs synchrones à aimant permanent (4), et
dans lequel le dispositif de commande (1) est configuré pour sélectionner un moteur avec une température relativement basse parmi la pluralité de moteurs synchrones à aimant permanent (4) lorsque la valeur de commande de couple est élevée, et est configuré pour sélectionner un moteur avec une température relativement élevée parmi la pluralité de moteurs synchrones à aimant permanent (4) lorsque la valeur de commande de couple est faible.

**2.** Dispositif d'entraînement pour une machine dynamoélectrique selon la revendication 1,
dans lequel la valeur de commande de couple de chaque machine dynamoélectrique (4) est ajustable de sorte que la quantité totale de valeurs de commande de couple de la pluralité de machines dynamoélectriques (1) reste approximativement constante.

**3.** Dispositif d'entraînement pour une machine dynamoélectrique selon l'une quelconque des revendications 1 à 2,
dans lequel le dispositif de commande (1) est configuré pour enregistrer une cartographie qui indique l'efficience de chaque moteur synchrone à aimant permanent au moment des changements de température des moteurs synchrones à aimant permanent (4) ou une formule de calcul destinée à obtenir l'efficience, et pour sélectionner un moteur relativement très efficient parmi la pluralité de moteurs synchrones à aimant permanent (4) par rapport aux changements de température des moteurs synchrones à aimant permanent (4) sur la base de la cartographie ou de la formule de calcul.

**4.** Dispositif d'entraînement pour une machine dynamoélectrique selon l'une quelconque des revendications 1 à 3,

dans lequel le dispositif de commande (1) est configuré pour ne pas augmenter la valeur de commande de couple du moteur synchrone à aimant permanent avec une température élevée lorsque la température dépasse une température admissible prédéfinie dans une zone à haute vitesse ou une zone à faible couple du moteur synchrone à aimant permanent.

5. Dispositif d'entraînement pour une machine dynamoélectrique selon l'une quelconque des revendications 1 à 4, dans lequel la valeur estimée de température d'un aimant permanent dans un rotor du moteur synchrone à aimant permanent est utilisée comme température.

6. Dispositif d'entraînement pour une machine dynamoélectrique selon la revendication 5, dans lequel le dispositif de commande (1) est configuré pour estimer la température ou une quantité de flux magnétique de l'aimant permanent en utilisant une période d'entraînement tout en définissant la valeur de commande de couple pour le moteur synchrone à aimant permanent sur environ 0.

7. Dispositif d'entraînement pour une machine dynamoélectrique selon la revendication 6, dans lequel, lorsque la direction d'un pôle magnétique formé par l'aimant permanent dans le rotor est un axe d, la direction orthogonale par rapport à l'axe d selon un angle électrique est un axe q, une valeur définie d'inductance dans l'axe d et une valeur définie du flux magnétique d'aimant dans le dispositif de commande sont $L_d^*$ et $K_e^*$, respectivement, et une valeur de commande actuelle de l'axe d est $i_d^*$, sensiblement 0 de la valeur de commande de couple signifie que la valeur de commande actuelle de l'axe q est 0 et la valeur de commande actuelle $i_d^*$ de l'axe d est $i_d^* \leq K_e^*/(5 \cdot L_d^*)$.

8. Dispositif d'entraînement pour une machine dynamoélectrique selon la revendication 6 ou 7, dans lequel le dispositif de commande (1) est configuré pour estimer la température ou une quantité de flux magnétique pendant une période de définition de la valeur de commande de couple sur 0 prévue avant d'augmenter la valeur de commande de couple au moment du redémarrage de la marche en roue libre, dans lequel l'estimation repose sur le moment auquel la tension fournie au moteur synchrone à aimant permanent est arrêtée et l'état de roulement libre du rotor du moteur synchrone à aimant permanent est lancé.

9. Dispositif d'entraînement pour une machine dynamoélectrique selon l'une quelconque des revendications 6 à 8, dans lequel, lorsque la vitesse du rotor du moteur synchrone à aimant permanent est une valeur prédéterminée ou est plus élevée après que la valeur de commande de couple a été réduite à 0, le dispositif de commande (1) est configuré pour estimer la température ou la quantité de flux magnétique pendant une période d'entraînement tout en définissant la valeur de commande de couple sur 0.

10. Véhicule ferroviaire dans lequel le dispositif d'entraînement pour une machine dynamoélectrique selon l'une quelconque des revendications 1 à 9 est monté et la machine dynamoélectrique est un moteur destiné à des roues motrices.

11. Procédé d'entraînement d'une machine dynamoélectrique, comprenant :

l'acquisition des informations de température de chacune d'une pluralité de machines dynamoélectriques (4) entraînées par une pluralité de dispositifs de génération de tension (3) destinés à fournir des tensions arbitraires, la sélection d'une machine dynamoélectrique relativement très efficiente parmi la pluralité de machines dynamoélectriques (4) sur la base de chaque information de température, et l'augmentation d'une valeur de commande de couple de la machine dynamoélectrique sélectionnée par rapport à la pluralité d'autres machines dynamoélectriques (4) ; **caractérisé en ce que** les machines dynamoélectriques sont des moteurs synchrones à aimant permanent (4), et dans lequel un moteur avec une valeur relativement faible des informations de température est choisi parmi la pluralité de moteurs synchrones à aimant permanent (4) lorsque la valeur de commande de couple est élevée, et un moteur avec une valeur relativement élevée des informations de température est choisi parmi la pluralité de moteurs synchrones à aimant permanent (4) lorsque la valeur de commande de couple est faible.

12. Procédé d'entraînement d'une machine dynamoélectrique selon la revendication 11, dans lequel la valeur de commande de couple de chaque machine dynamoélectrique (4) est ajustable de sorte que la quantité totale de valeurs de commande de couple de la pluralité de machines dynamoélectriques (4) reste approximativement constante.

FIG. 1

# FIG. 2

EP 3 905 511 B1

# FIG. 3

(a) at the time of high torque

(b) at the time of middle torque

(c) at the time of low torque

# FIG. 4

(a) in low-speed range

(b) in medium-speed range

(c) in high-speed range

# FIG. 5

A region where the lower temperature is higher efficiency.

A region where the higher temperature is higher efficiency.

Torque [Nm]

Rotational speed [min⁻¹]

FIG. 6

12

$\tau_{m0}^{*}$ ───────► $\tau_{m1}^{*}$

───────► $\tau_{m2}^{*}$

(a) prior art

12

$\tau_{m0}^{*}$

$\Delta\tau_{m1}^{*}$ ──► $\tau_{m1}^{*}$

$\Delta\tau_{m2}^{*}$ ──► $\tau_{m2}^{*}$

Torque compensation calculation unit                    26

$T_1$        $T_2$

$$\Delta\tau_{m1}^{*} + \Delta\tau_{m2}^{*} = 0$$

(b) 2 motor units

12

$\tau_{m0}^{*}$

$\Delta\tau_{m1}^{*}$ ──► $\tau_{m1}^{*}$

$\Delta\tau_{m2}^{*}$ ──► $\tau_{m2}^{*}$

$\Delta\tau_{m3}^{*}$ ──► $\tau_{m3}^{*}$

$\Delta\tau_{m4}^{*}$ ──► $\tau_{m4}^{*}$

Torque compensation calculation unit                    26

$T_1$    $T_2$    $T_3$    $T_4$

$$\Delta\tau_{m1}^{*} + \Delta\tau_{m2}^{*} + \Delta\tau_{m3}^{*} + \Delta\tau_{m4}^{*} = 0$$

(c) 4 motor units

EP 3 905 511 B1

# FIG. 7

FIG. 8

FIG. 9

FIG.10

| Condition | Normal Drive mode (Regeneration) | Zero-torque control | Free-run |

Ke^ estimation
Gate off

**EP 3 905 511 B1**

**REFERENCES CITED IN THE DESCRIPTION**

**Patent documents cited in the description**

- JP 2018057185 A
- JP 5060266 B
- JP H07039018 A